# EUROPEAN PATENT APPLICATION

(11) **EP 1 212 946 A2**
(43) Date of publication of application: **12.06.2002**
(21) Application number: 01310227.2
(22) Date of filing: 06.12.2001
(51) Int. Cl.: A23C 11/06, A23C 9/12

(54) **Lactose-reduced milk fortified with soy protein**

(30) Priority: 07.12.2000 US 251772 P; 20.11.2001 US 989578
(71) Applicant: McNEIL-PPC, INC., Skillman, New Jersey 08558 (US)
(72) Inventor: Finocchiaro, Eugene Terry, Worecester, PA 19426 (US)
(74) Representative: Mercer, Christopher Paul

(57) **Abstract**

A lactose reduced milk and methods for making such a milk containing soy protein in an amount sufficient to provide at least about 6.25 g. soy protein per serving and, optionally, a stabilizer, a soy masking flavor, a milk type flavor and mixtures thereof.

## Description

### Field of the Invention

The present invention is directed to lactose-reduced milk fortified with soy protein.

### Background of the Invention

Fortification of food products with soy protein has proliferated since the October 1999 U.S. Food and Drug Administration's approval of a health claim that can be used on labels of soy-based foods to tout their heart-healthy benefits, 64 FR 57699, October 26, 1999. In particular, this claim can be place on products containing, among other ingredients, at least 6.25g soy protein/serving. Although soymilks have gained in popularity in recent years, the product's organoleptic appeal has been limited by off flavors associated with the manufacturing of soymilk prepared directly from soybeans. While recent technical improvements have seen the proliferation of relatively bland tasting isolated soy proteins, even these purified protein isolates display off-flavors when incorporated into beverages.

Lactose-reduced, i.e., lactose hydrolyzed, milk has been commercially available for years and has provided opportunity to the lactose-intolerant population to enjoy the taste and nutrition of milk without the typical adverse digestive problems associated with the ingestion of lactose

What is needed therefore is a milk beverage having a combination of lactose-reduced milk and soy protein isolates. Such a beverage will provide a nutritionally superior beverage to the general (including lactose intolerant) population than is currently known. However, dispersion and stabilization of soy protein powder into fluid milk has been problematic. In particular, the protein will have a tendency to display a chalky mouthfeel and settling or sedimentation will occur, which forms a "sludge" in the bottom of retail packages. Therefore, what is also needed is the right combination of ingredients, process, formula and storage conditions to stabilize the milk and soy protein combination. In addition, a superior tasting product is also needed, as state-of-the-art soymilks are known for inferior flavor quality relative to milk-only beverages. The present invention addresses those defects, by combining a sweeter tasting milk base with isolated soy protein, as opposed to the typical soymilks prepared directly from soybeans. Moreover, the combination of the formula of the present invention with process and stabilizer of the present invention enables production of a high quality, long shelf-life, high protein milk beverage.

It has surprisingly been found that such a long shelf-life soymilk beverage can be made on a both a bench top and commercial scale. Furthermore, it has been a combination of sterilization techniques and subsequent handling/distribution reduces brown color formation believed to result from a chemical reaction of both soy and milk proteins with milk sugars (especially hydrolyzed milk sugars).

### Summary of the Invention

The present invention is directed to a lactose reduced milk and methods for making such a milk containing soy protein in an amount sufficient to provide at least about 6.25 g. soy protein per serving and, optionally, a stabilizer, a soy masking flavor, a milk type flavor and mixtures thereof.

### DETAILED DESCRIPTION

Lactose hydrolyzing lactase enzymes are known to be produced by various yeasts, bacteria and fungi. Among the organisms heretofore disclosed as useful for this purpose are yeasts, such as, *Saccharomyces fragilis, Torula cremoris* and *Torula utilis,* bacteria, such as, *Escherichia coli* and *Lactobacillus bulgaricus,* fungi, such as, *Aspergillus oryzae, Aspergillus flavus* and *Aspergillus niger,* and various other microorganisms, such as, those described in U.S. Pat. Nos. 2,681,858, 2,781,266, and 2,809,113. The lactase enzyme preparations produced by these organisms generally have pH optimums on the alkaline side or in the weakly acid pH range of about 5-7. Yeasts, which are the primary source of commercial lactases, are known to produce lactases having pH optimums of about 7. Most of these conventional lactase enzyme preparations contain other proteins in admixture therewith. When lactase is referred to herein, it is such an admixture that is referred to

As seen, lactase enzymes are commercially produced as biological products that have a variability in potency from batch to batch that requires adjustment with a cutting agent in order to produce a uniform commercial product. Cutting agent is added to the lactase enzyme product and the amount is adjusted from batch to batch to produce a lactase enzyme product of the target potency. Cutting agents may be selected from any inert pharmaceutical excipient, including, sugars, starches, cellulose, and inorganic salts. The amount or even the absence of the cutting agent herein is not critical to the present invention. Of course, it is desirable in the practice of the present invention that the lactase be in a readily available and convenient form of known potency for addition to the formulation. Suitable cutting agents include dextrose, mannitol, calcium phosphate, sodium citrate, and microcrystalline cellulose.

Suitable lactase for use herein include, a lactase isolated from Saccharomyces lactis, by Gist-Brocade in Delft, Holland, and sold by Enzyme Development Corporation, New York, N.Y.; a lactase from Aspergillus oryzae, Lactase Y-400, produced by K. K. Yakult Honsha; a lactase from Aspergillus oryzae, Plexazym LA 1, produced by Roehm GmbH; a lactase from Aspergillus oryzae, produced by Shinnihon Kagaku Kogyo Co.; a lactase from Kluyveromyces fragilis produced by Sturges Enzymes, Selby, North Yorkshire, England; a lactase from Aspergillus oryzae, Takamine lactase, produced by Miles Laboratories, Inc., Elkhart, Ind.; and a lactase from Kluyveromyces fragilis produced by Novo Enzymes, Bagsvaerd, Denmark. These suppliers and others offer, generally, lactase, including a cutting agent, having a potency of between about 14,000 and about 100,000 FCC lactase units/gram.

According to the present invention, lactose-reduced milk with added soy protein may optionally include stabilizers, flavors, and flavor-masking agents. A variety of techniques known to those having skill in the art can be used to disperse the soy isolate powder into milk. However, process capabilities at a given manufacturing plant will determine the best dispersion technique. For example, the soy protein can be dispersed and hydrated directly into cold (40°F) milk with using high shear equipment, e.g., agitation using a Breddo Likqufier ™ (Breddo Company, Division of Americal Ingredients Company, Kansas City, Kansas 66105). Conversely, ifhigh shear equipment is not readily available, proper dispersion and hydration of the soy protein can be accomplished by dispersing into pre-warmed milk (about 70 to about 110°F).

Hydrolyzing lactose, i.e., lactase treatment, in milk can be accomplished either before formula batching or after UHT sterilization.

According to a process of the present invention, soy protein is present from about 2 to about 7, preferably from about 3 to about 5%. Additional ingredients that may be included in the formulation include from about 0.01 to about 0.05 wt% of a stabilizer; from about 0.05 to about 0.3 wt% soy masking flavor, natural, n & a, or artificial; from about 0.05 wt% to about 0.3 wt% milk-type flavor, natural, n & a, or artificial.

Stabilizers suitable for use in the present invention are those capable of controlling sedimentation and improving the overall appearance and texture (viscosity). Preferably, the stabilizer is an edible hydrophilic colloid, i.e., a starch (including pre-gelatinized starch and chemically-modified starch), a gum (either natural or synthetic), or a chemically-modified polysaccharide. Preferred stabilizers suitable for use in the present invention include, but are not limited to, acacia, agar, algin, carrageenan, gum arabic, gum ghatti, gum karaya, gum tragacanth, guar gum, locust bean gum, xanthan gum, sodium alginate, xanthan gum, cellulosic gums, such as ,methyl cellulose, hydroxy ethyl cellulose, hydroxypropyl cellulose, hydroxypropyl methylcellulose, and carboxymethylcellulose, and mixtures thereof.

The use of ultra high temperature ("UHT") sterilization is not necessary to carry out the present invention. Although the combination of UHT treatment and refrigerated (about 38 to about 45°F) storage enables a high quality, long-shelf life milk beverage, excellent quality would be expected from same formula processed with typical industry methods of pasteurization (HTST or LTLT techniques) for shorter shelf life products.

After dispersion, UHT sterilization can be carried out by any known method to those having skill in the art. However, direct steam injection is the preferred method of UHT sterilization because less thermal damage of proteins occurs as well as less browning. As mentioned above, while UHT processing provides for a longer shelf life (from about 2 to 9 months), it is not a necessary requirement for a milk beverage where shorter shelf life (about 2 to 4 weeks) is acceptable. Where a shorter shelf life milk beverage is desired, standard milk industry pasteurization techniques provide for a higher quality product, e.g., better flavors, less thermal damage, and the like.

After UHT processing or pasteurization, the milk beverage product can be near aseptically filled into purepak, glass or plastic containers, preferably at from about 40 to about 70°F. After filling, all subsequent holding, warehousing, distribution, and retailing is done under refrigerated conditions (from about 38 to about 45°F). Controlled temperatures will result in overall better quality, as even ambient temperature conditions will tend to accelerate flavor degradation, brown color formation, sludge formation, and the like.

After the invention has been described in general hereinbefore, the following examples are intended to illustrate details of the invention, without thereby limiting it in any matter.

### Examples:

Lactose reduced milk was fortified with soy protein isolates from two sources, PTI (Protein Technologies International, St. Louis, MO) and ADM (Archer Daniels Midland Company, Decatur, IL), as described in tables 1 and 2 below, and screened for sensory properties, e.g, flavor, taste, and the like, and sedimentation. One of the PTI samples, FXP H0211, was observed to have the most acceptable flavor characteristics. This formulation was chosen for further testing.

Lactose reduced milk (LACTAID® 100) was warmed to about 110°F in a water bath. Soy protein isolates, gum, soy masking flavor, and milk and cream-type flavor were then dispersed in the milk and mixed at about 300 to about 800 rpm using a pneumatic high speed mixer for about 10 minutes at about 100°F. The dispersion was then homogenized at about 2500 rpm at 500PSI using a two-stage homogenizer. After homogenization, the homogenized dispersion was UHT processed with a MicroThermics (Raleigh, NC0 lab scale UHT processor) at about 280 to about 283°F for about 15 seconds. The resulting product was cooled to about 40°F using refrigeration, filled into 8 oz plastic container containers, then stored at about 40°F for stability and sensory testing.

After two weeks of storage at about 40°F, sedimentation tests on the dispersion product using a QuickSCAN analyzer (Part No. 6605413, Beckman Coulter Inc., Fullerton, CA) revealed minimal settling of the dispersion. Additional accelerated sedimentation tests on the product using a centrifuge (Centrific tm Model 228, Fischer Scientific, Pittsburg, PA) (about 2800 x g, 3 min) also revealed minimal sedimentation as demonstrated by the absence of pelleted solids at the bottom of the centrifuge tube after centrifugation.

Sensory tests after two weeks on the product formulated with PTI's soy protein was perceived by tasters to have the most acceptable flavor and described as "creamier," "flavorful," "least soy-like," "best viscosity," and "good," and was preferred over the ADM protein based on paneling by sensory experts.

**Table 1:**

| **PTI Soy Protein Formula** | | | | | |
|---|---|---|---|---|---|
| Ingredient | Supplier | % w/w | g per 240 g serving | % Protein in Total | |
| | | | | Ingredient | Protein Per Servi |
| Soy Protein Isolate, FXP H0211 | PTI | 3.296 | 7.91 | 79.0 | 6.25 |
| Natural Soy Masking Flavor, 17926 | Comax | 0.100 | 0.24 | | |
| N&A Milk Type Flavor, 876.077/PM | Flavors of North America | 0.100 | 0.24 | | |
| Carrageenan, SeaKem CM611 | FMC | 0.020 | 0.048 | | |
| Fat Free Lactaid 100 | HP Hood (commercial) | 96.48 | 231.56 | 3.38 | 7.83 |
| TOTAL | | 100.00 | 240.00 | | 14.08 |

**Table 2:**

| **ADM Soy Protein Formula** | | | | | |
|---|---|---|---|---|---|
| Ingredient | Supplier | % w/w | g per 240 g serving | % Protein in Total | |
| | | | | Ingredient | Protein Per Sen |
| Soy Protein Isolate, Profam 873 | ADM | 3.078 | 7.38 | 84.6 | 6.25 |
| Natural Soy Masking Flavor, 17926 | Comax | 0.100 | 0.24 | | |
| N&A Milk Type Flavor, 876.077/PM | Flavors of North America | 0.100 | 0.24 | | |
| Carrageenan, SeaKem CM611 | FMC | 0.020 | 0.048 | | |
| Fat Free Lactaid 100 | HP Hood (commercial) | 96.70 | 232.08 | 3.38 | 7.84 |
| TOTAL | | 100.00 | 240.00 | | 14.09 |

## Claims

1. A lactose reduced milk comprising soy protein in an amount sufficient to provide at least about 6.25 g. soy protein per serving.

2. A lactose reduced milk of claim 1, further comprising a member selected from the group consisting of a stabilizer, a soy masking flavor, a milk-type flavor and mixtures thereof.

3. A lactose reduced milk of claim 2 wherein the stabilizer is selected from the group consisting of an edible hydrophilic colloid, a starch, a gum, a chemically-modified polysaccharide, and mixtures thereof.

4. A lactose reduced milk of claim 3 wherein the stabilizer is selected from the group consisting of acacia, agar, algin, carrageenan, gum arabic, gum ghatti, gum karaya, gum tragacanth, guar gum, locust bean gum, xanthan gum, sodium alginate, xanthan gum, cellulosic gums, such as ,methyl cellulose, hydroxy ethyl cellulose, hydroxypropyl cellulose, hydroxypropyl methylcellulose, carboxymethylcellulose, and mixtures thereof.

5. A lactose reduced milk of claim 1 comprising from about 2 to about 7 wt % soy protein.

6. A method for making a lactose reduced milk comprising soy protein, the method comprising
a) providing lactose reduced milk;
b) dispersing soy protein into the lactose reduced-milk to form a mixture that provides at least about 6.25 g. soy protein per serving; and
c) homogenizing the mixture.

7. A method of claim 7, further comprising dispersing with the soy protein, a member selected from the group consisting of a stabilizer, a soy masking flavor, a milk flavor and mixtures thereof.

8. A method of claim 8 wherein the stabilizer is selected from the group consisting of an edible hydrophilic colloid, a starch, a gum, a chemically-modified polysaccharide, and mixtures thereof.

9. A method of claim 8 wherein the stabilizer is selected from the group consisting of acacia, agar, algin, carrageenan, gum arabic, gum ghatti, gum karaya, gum tragacanth, guar gum, locust bean gum, xanthan gum, sodium alginate, xanthan gum, cellulosic gums, such as ,methyl cellulose, hydroxy ethyl cellulose, hydroxypropyl cellulose, hydroxypropyl methylcellulose, carboxymethylcellulose, and mixtures thereof.

10. A method of claim 6 for producing a lactose reduced milk comprising from about 2 to about 7 wt % soy protein.
